# EUROPEAN PATENT APPLICATION

(11) **EP 4 102 786 A1**
(43) Date of publication of application: **14.12.2022**
(21) Application number: 20922711.5
(22) Date of filing: 30.12.2020
(51) Int. Cl.: H04L 12/721

(54) **SR POLICY ISSUING METHOD AND APPARATUS AND SR POLICY RECEIVING METHOD AND APPARATUS**

(30) Priority: 06.03.2020 CN 202010153148
(71) Applicant: Huawei Technologies Co., Ltd., Shenzhen, Guangdong 518129, (CN)
(72) Inventor: GENG, Xuesong, Shenzhen, Guangdong 518129 (CN); CHEN, Guoyi, Shenzhen, Guangdong 518129 (CN)
(74) Representative: Maiwald GmbH
(86) International application number: PCT/CN2020/141582
(87) International publication number: WO 2021/174985

(57) **Abstract**

This application relates to the communication field, and discloses an SR policy issuing method and apparatus and an SR policy receiving method and apparatus. The method can improve reliability of packet flow transmission. The method is applied to an SR network. The SR network includes a path computation node, a first node, and a second node, a first path and a second path that are different from each other exist between the first node and the second node, a source node of each of the first path and the second path is the first node, and a destination node of each of the first path and the second path is the second node. The method includes: The path computation node generates at least one SR policy; and the path computation node sends the at least one SR policy to the first node, where the at least one SR policy indicates the first node to generate a first packet flow based on a received original packet flow and send the first packet flow through the first path, and the at least one SR policy further indicates the first node to generate a second packet flow based on the original packet flow and send the second packet flow through the second path.

## Description

This application claims priority to Chinese Patent Application No. 202010153148.4, filed with the China National Intellectual Property Administration on March 6, 2020 and entitled "SR POLICY ISSUING METHOD AND APPARATUS AND SR POLICY RECEIVING METHOD AND APPARATUS", which is incorporated herein by reference in its entirety.

### TECHNICAL FIELD

This application relates to the communication field, and in particular, to a segment routing (segment routing, SR) policy issuing method and apparatus and a segment routing policy receiving method and apparatus.

### BACKGROUND

To improve reliability of packet flow transmission, a packet flow is usually transmitted through an active/standby path. When a fault occurs on the active path, the packet flow is switched to the standby path for transmission.

However, conventionally, a packet loss occurs during switching between the active path and the standby path. Therefore, how to further improve the reliability of the packet flow transmission is a problem that needs to be urgently resolved.

### SUMMARY

This application provides an SR policy issuing method and apparatus and an SR policy receiving method and apparatus, to perform multi-fed and selective receiving on a packet flow by using an SR technology, thereby improving reliability of packet flow transmission.

To achieve the objective, this application provides the following technical solutions.

According to a first aspect, this application provides a segment routing SR policy issuing method. The method is applied to an SR network. The SR network includes a path computation node, a first node, and a second node, a first path and a second path that are different from each other exist between the first node and the second node, a source node of each of the first path and the second path is the first node, and a destination node of each of the first path and the second path is the second node. The method includes: The path computation node generates at least one SR policy, and then the path computation node sends the at least one SR policy to the first node, where the at least one SR policy indicates the first node to generate a first packet flow based on a received original packet flow and send the first packet flow through the first path, and the at least one SR policy further indicates the first node to generate a second packet flow based on the original packet flow and send the second packet flow through the second path.

According to the method, the first node in the SR network may send a packet flow to the second node through at least two paths. In this case, even if a packet loss occurs on one or more paths, the second node may still receive a packet transmitted on another path. Therefore, the method provided in this application improves reliability of packet flow transmission.

With reference to the first aspect, in a possible design manner, the at least one SR policy includes a first segment identity SID, a packet of the original packet flow includes the first SID, and the first SID indicates the first node to determine the at least one SR policy corresponding to the original packet flow. That is, when transmitting the packet flow, the first node may perform traffic steering by using the first SID. In this way, after the traffic steering, the first node may transmit the packet flow by using the foregoing method, so that the reliability of the packet flow transmission is improved.

With reference to the first aspect, in another possible design manner, the at least one SR policy further includes a policy identity, routing information received by the first node includes the policy identity and a prefix, and the packet of the original packet flow matches the prefix. In this case, the policy identity may indicate the first node to determine the at least one SR policy corresponding to the original packet flow. That is, when transmitting the packet flow, the first node may further perform traffic steering by using the routing information. In this way, after the traffic steering, the first node may transmit the packet flow by using the foregoing method, so that the reliability of the packet flow transmission is improved.

With reference to the first aspect, in another possible design manner, the at least one SR policy includes a first candidate path and a second candidate path, the first candidate path includes a first segment list, and the second candidate path includes a second segment list. The first candidate path is the first path, the second candidate path is the second path, a packet of the first packet flow includes the first segment list, and a packet of the second packet flow includes the second segment list. In this case, the first packet flow may be transmitted through the first path, and the second packet flow may be transmitted through the second path. Therefore, the second node may receive the packet flows transmitted through the plurality of paths, so that the reliability of the packet flow transmission is improved.

With reference to the first aspect, in another possible design manner, the at least one SR policy includes a first SR policy, and the first SR policy includes the first candidate path and the second candidate path. A preference preference value of the first candidate path is the same as a preference preference value of the second candidate path. Alternatively, the at least one SR policy includes a first SR policy and a second SR policy, the first SR policy includes the first candidate path, the second SR policy includes the second candidate path, and an attribute value of the first policy is the same as an attribute value of the second policy. A same preference preference value is marked for different candidate paths in one SR policy, or a same attribute value is marked for a plurality of SR policies including different candidate paths, so that the plurality of paths may be used to transmit the packets. In this way, the second node may receive the packet flows transmitted through the plurality of paths, so that the reliability of the packet flow transmission is improved.

With reference to the first aspect, in another possible design manner, before that "the path computation node generates at least one SR policy", the method further includes: The path computation node obtains a second SID. That "the path computation node generates at least one SR policy" includes: The path computation node generates the at least one SR policy based on the second SID. A segment list of the at least one SR policy includes the second SID, and the second SID in the segment list of the at least one SR policy indicates the second node to delete a redundant packet from the first packet flow and the second packet flow that are received.

With reference to the first aspect, in another possible design manner, the SR network further includes a third node, a third path exists between the second node and the third node, a source node of the third path is the second node, and a destination node of the third path is the third node. The method further includes: The path computation node sends a third SR policy to the second node. The third SR policy includes a third candidate path, the third candidate path is the third path, and the third SR policy indicates the second node to forward a non-redundant packet through the third path. The non-redundant packet is obtained based on the first packet flow and the second packet flow. The third SR policy further includes the second SID, and the second SID indicates the second node to determine the third SR policy corresponding to the first packet flow and the third SR policy corresponding to the second packet flow.

With reference to the first aspect, in another possible design manner, that "the path computation node sends the at least one SR policy to the first node" includes: The path computation node sends the at least one SR policy to the first node according to a path computation element protocol PCEP or a border gateway protocol BGP.

With reference to the first aspect, in another possible design manner, the at least one SR policy further indicates the first node to add a type-length-value TLV field to each of the packet of the first packet flow and the packet of the second packet flow. The TLV field includes a redundant parameter, and the redundant parameter indicates the second node to delete a redundant packet from the first packet flow and the second packet flow that are received.

With reference to the first aspect, in another possible design manner, a payload of the packet in the first packet flow is the same as a payload of the packet in the second packet flow, and each of the payload of the packet in the first packet flow and the payload of the packet in the second packet flow is a payload in the original packet flow. It can be learned that only after payload copying is performed, the original packet flow is sent to the second node through the at least two paths by using the foregoing method, so that the reliability of the packet transmission is improved.

According to a second aspect, this application provides a segment routing SR policy receiving method. The method is applied to an SR network. The SR network includes a first node and a second node, a first path and a second path that are different from each other exist between the first node and the second node, a source node of each of the first path and the second path is the first node, and a destination node of each of the first path and the second path is the second node. The method includes: The first node obtains at least one SR policy. The at least one SR policy indicates the first node to generate a first packet flow based on a received original packet flow and send the first packet flow through the first path, and the at least one SR policy further indicates the first node to generate a second packet flow based on the original packet flow and send the second packet flow through the second path.

With reference to the second aspect, in a possible design manner, the SR network further includes a path computation node. That "the first node obtains at least one SR policy" includes: The first node receives the at least one SR policy sent by the path computation node, to obtain the at least one SR policy. Alternatively, the first node generates the at least one SR policy.

With reference to the second aspect, in another possible design manner, the at least one SR policy includes a first segment identity SID, and a packet of the original packet flow includes the first SID. In this case, the first SID may indicate the first node to determine the at least one SR policy corresponding to the original packet flow.

With reference to the second aspect, in another possible design manner, the at least one SR policy further includes a policy identity. The method further includes: The first node receives routing information sent by the second node. The routing information includes the policy identity and a prefix, and the packet of the original packet flow matches the prefix. In this case, the policy identity may indicate the first node to determine the at least one SR policy corresponding to the original packet flow.

With reference to the second aspect, in another possible design manner, the at least one SR policy includes a first candidate path and a second candidate path, the first candidate path includes a first segment list, and the second candidate path includes a second segment list. The first candidate path is the first path, and the second candidate path is the second path. A packet of the first packet flow includes the first segment list, and a packet of the second packet flow includes the second segment list.

With reference to the second aspect, in another possible design manner, the at least one SR policy includes a first SR policy. In this case, the first SR policy includes the first candidate path and the second candidate path, and a preference preference value of the first candidate path is the same as a preference of the second candidate path. Alternatively, the at least one SR policy includes a first SR policy and a second SR policy. In this case, the first SR policy includes the first candidate path, the second SR policy includes the second candidate path, and an attribute value of the first policy is the same as an attribute value of the second policy.

With reference to the second aspect, in another possible design manner, the at least one SR policy indicates the first node to add a type-length-value TLV field to each of the packet of the first packet flow and the packet of the second packet flow. The TLV field includes a redundant parameter, and the redundant parameter indicates the second node to delete a redundant packet from the first packet flow and the second packet flow that are received.

With reference to the second aspect, in another possible design manner, a payload of the packet in the first packet flow is the same as a payload of the packet in the second packet flow, and each of the payload of the packet in the first packet flow and the payload of the packet in the second packet flow is a payload in the original packet flow.

It may be understood that for beneficial effects of the technical solution provided in the second aspect or corresponding possible designs of the second aspect, refer to the descriptions of the technical solution provided in the first aspect or corresponding possible designs of the first aspect. Details are not described herein again.

According to a third aspect, this application provides a segment identity issuing method. The method is applied to an SR network. The SR network includes a path computation node, a first node, and a second node. A first path and a second path that are different from each other exist between the first node and the second node, a source node of each of the first path and the second path is the first node, and a destination node of each of the first path and the second path is the second node. The method includes: The second node issues a second segment identity SID. Herein, the second SID is used by the path computation node to generate at least one SR policy. The at least one SR policy indicates the first node to generate a first packet flow based on a received original packet flow and send the first packet flow through the first path, and the at least one SR policy further indicates the first node to generate a second packet flow based on the original packet flow and send the second packet flow through the second path. Packets of the first packet flow and the second packet flow include the second SID, and the second SID in the packets of the first packet flow and the second packet flow indicates the second node to delete a redundant packet from the first packet flow and the second packet flow that are received.

With reference to the third aspect, in a possible design manner, the foregoing method further includes: The second node issues routing information. The routing information includes a policy identity and a prefix, and a packet of the original packet flow matches the prefix. In this case, the policy identity may indicate the first node to determine the at least one SR policy corresponding to the original packet flow.

With reference to the third aspect, in another possible design manner, the SR network further includes a third node. A third path exists between the second node and the third node, a source node of the third path is the second node, and a destination node of the third path is the third node. The method further includes: The second node receives a third SR policy sent by the path computation node. The third SR policy includes a third candidate path, the third candidate path is the third path, and the third SR policy indicates the second node to forward a non-redundant packet through the third path. The non-redundant packet is obtained based on the first packet flow and the second packet flow. The third SR policy further includes the second SID, and the second SID indicates the second node to determine the third SR policy corresponding to the first packet flow and the third SR policy corresponding to the second packet flow.

With reference to the third aspect, in another possible design manner, each of the packet of the first packet flow and the packet of the second packet flow include a type-length-value TLV field. The TLV field includes a redundant parameter, and the redundant parameter indicates a redundant packet.

With reference to the third aspect, in another possible design manner, the second SID may be generated by the second node. In this case, that "the second node issues a second SID" includes: The second node floods the second SID according to an interior gateway protocol IGP or a border gateway protocol-link state BGP-LS.

It may be understood that for beneficial effects of the technical solution provided in the third aspect or corresponding possible designs of the third aspect, refer to the descriptions of the technical solution provided in the first aspect or corresponding possible designs of the first aspect. Details are not described herein again.

According to a fourth aspect, this application provides a segment routing SR policy issuing apparatus. The apparatus may be a path computation node, a chip, or a chip system.

In a possible design, the apparatus may be configured to perform any method provided in the first aspect. In this application, the apparatus may be divided into functional modules according to any method provided in the first aspect. For example, each functional module may be obtained through division based on a corresponding function, or two or more functions may be integrated into one processing module. For example, in this application, the apparatus may be divided into a processing unit, a sending unit, and the like based on functions. For descriptions of possible technical solutions performed by the foregoing functional modules obtained through division and beneficial effects achieved by the foregoing functional modules, refer to the technical solutions provided in the first aspect or corresponding possible designs of the first aspect. Details are not described herein again.

In another possible design, the apparatus includes: a memory and one or more processors. The memory is configured to store computer instructions, and the processor is configured to invoke the computer instructions to perform the method according to any one of the first aspect and the possible design manners of the first aspect.

According to a fifth aspect, this application provides a segment routing SR policy receiving apparatus. The apparatus may be a first node, a chip, or a chip system.

In a possible design, the apparatus may be configured to perform any method provided in the second aspect. In this application, the apparatus may be divided into functional modules according to any method provided in the second aspect. For example, each functional module may be obtained through division based on a corresponding function, or two or more functions may be integrated into one processing module. For example, in this application, the apparatus may be divided into a processing unit, a receiving unit, and the like based on functions. For descriptions of possible technical solutions performed by the foregoing functional modules obtained through division and beneficial effects achieved by the foregoing functional modules, refer to the technical solutions provided in the second aspect or corresponding possible designs of the second aspect. Details are not described herein again.

In another possible design, the apparatus includes: a memory and one or more processors. The memory is configured to store computer instructions, and the processor is configured to invoke the computer instructions to perform the method according to any one of the second aspect and the possible design manners of the second aspect.

According to a sixth aspect, this application provides a segment identity issuing apparatus. The apparatus may be a second node, a chip, or a chip system.

In a possible design, the apparatus may be configured to perform any method provided in the third aspect. In this application, the apparatus may be divided into functional modules according to any method provided in the third aspect. For example, each functional module may be obtained through division based on a corresponding function, or two or more functions may be integrated into one processing module. For example, in this application, the apparatus may be divided into a sending unit, a receiving unit, and the like based on functions. For descriptions of possible technical solutions performed by the foregoing functional modules obtained through division and beneficial effects achieved by the foregoing functional modules, refer to the technical solutions provided in the second aspect or corresponding possible designs of the second aspect. Details are not described herein again.

In another possible design, the apparatus includes: a memory and one or more processors. The memory is configured to store computer instructions, and the processor is configured to invoke the computer instructions to perform the method according to any one of the third aspect and the possible design manners of the third aspect.

According to a seventh aspect, this application provides a computer-readable storage medium, for example, a non-transient computer-readable storage medium. The computer-readable storage medium stores a computer program (or instructions). When the computer program (or the instructions) is/are run on a computer, the computer is enabled to perform the method according to any one of the possible implementations of the first aspect.

According to an eighth aspect, this application provides a computer-readable storage medium, for example, a non-transient computer-readable storage medium. The computer-readable storage medium stores a computer program (or instructions). When the computer program (or the instructions) is/are run on a computer, the computer is enabled to perform the method according to any one of the possible implementations of the second aspect.

According to a ninth aspect, this application provides a computer-readable storage medium, for example, a non-transient computer-readable storage medium. The computer-readable storage medium stores a computer program (or instructions). When the computer program (or the instructions) is/are run on a computer, the computer is enabled to perform the method according to any one of the possible implementations of the third aspect.

According to a tenth aspect, a computer program product is provided. When the computer program product runs on a computer, the method according to any one of the possible implementations of the first aspect is performed.

According to an eleventh aspect, a computer program product is provided. When the computer program product runs on a computer, the method according to any one of the possible implementations of the second aspect is performed.

According to a twelfth aspect, a computer program product is provided. When the computer program product runs on a computer, the method according to any one of the possible implementations of the third aspect is performed.

According to a thirteenth aspect, a network system is provided. The network system includes the segment routing SR policy issuing apparatus according to any one of the possible implementations of the fourth aspect, the segment routing SR policy receiving apparatus according to any one of the possible implementations of the fifth aspect, and the segment identity issuing apparatus according to any one of the possible implementations of the sixth aspect.

It may be understood that any one of the fusion apparatus, the computer storage medium, the computer program product, the chip system, or the like provided above may be applied to a corresponding method provided above. Therefore, for beneficial effects that can be achieved by the fusion apparatus, the computer storage medium, the computer program product, the chip system, or the like, refer to the beneficial effects in the corresponding method. Details are not described herein again.

In this application, names of the segment routing SR policy issuing apparatus, the segment routing SR policy receiving apparatus, and the segment identity issuing apparatus, and the like do not constitute a limitation on devices or functional modules. During actual implementation, these devices or functional modules may appear in other names. The devices or functional modules fall within the scope of the claims and their equivalent technologies in this application, provided that functions of the devices or functional modules are similar to those in this application.

These aspects or other aspects in this application are more concise and comprehensible in the following descriptions.

### BRIEF DESCRIPTION OF DRAWINGS

FIG. 1 is a schematic diagram of a structure of an SR policy according to an embodiment of this application;
FIG. 2 is a schematic diagram of a network architecture according to an embodiment of this application;
FIG. 3 is a schematic diagram of a structure of a packet flow according to an embodiment of this application;
FIG. 4 is a schematic diagram of a structure of a computing device according to an embodiment of this application;
FIG. 5 is a schematic flowchart 1 of an SR policy issuing method according to an embodiment of this application;
FIG. 6 is a schematic flowchart 2 of an SR policy issuing method according to an embodiment of this application;
FIG. 7 is a schematic flowchart 3 of an SR policy issuing method according to an embodiment of this application;
FIG. 8 is a schematic diagram of an SR policy issuing method according to an embodiment of this application;
FIG. 9 is a schematic diagram of a structure of a path computation node according to an embodiment of this application;
FIG. 10 is a schematic diagram of a structure of a first node according to an embodiment of this application;
FIG. 11 is a schematic diagram of a structure of a second node according to an embodiment of this application; and
FIG. 12 is a schematic diagram of a structure of a computer program product according to an embodiment of this application.

### DESCRIPTION OF EMBODIMENTS

The following describes some terms or technologies in embodiments of this application.

### (1) Flooding (flooding)

Flooding is a packet flow transmission technology. That a node floods a packet flow in a network means that the node sends the packet flow to all nodes except the node.

### (2) Segment routing (SR)

SR is a source routing technology. A source node specifies a forwarding path for a service packet, converts the forwarding path into an ordered segment list (segment list), and encapsulates the ordered segment list into a packet header. An intermediate node on the path only needs to perform forwarding through a path specified in the packet header. The segment list may be any instruction indicating a network node (for example, a router) to process a packet, for example, to forward the packet to a destination through a shortest path, to forward the packet through a specified port, or to forward the packet to a specified application/service instance.

### (3) Segment routing policy (segment routing policy, SR Policy)

An SR policy includes three layers: the SR policy, a candidate path (candidate path), and a segment list. Each SR policy may include a plurality of candidate paths, each candidate path may include a plurality of segment lists, and each segment (segment) in the segment list carries an indication of processing a packet in the network. Therefore, the SR policy may also be considered as a set of paths.

The segment is usually represented by a segment identity (segment identity, SID). The SID may be a multi-protocol label switching (multi-protocol label switching, MPLS) label or an internet protocol version 6 (internet protocol version 6, IPv6) address. The SID usually indicates that a packet is forwarded through a specific port or along a specific path.

Different candidate paths in one SR policy are mainly used for switching between an active path and a standby path, and have different preference values. Herein, the preference values are used to distinguish between different candidate paths. Usually, different candidate paths in one SR policy may have different preference values. In one SR policy, only one candidate path is used to transmit a packet flow, and all candidate paths except the candidate path are in a standby state.

One candidate path may include a plurality of segment lists, and one segment list may include at least one SID. Different segment lists have a same weight (weight) or different weights, and balance loads based on respective weights.

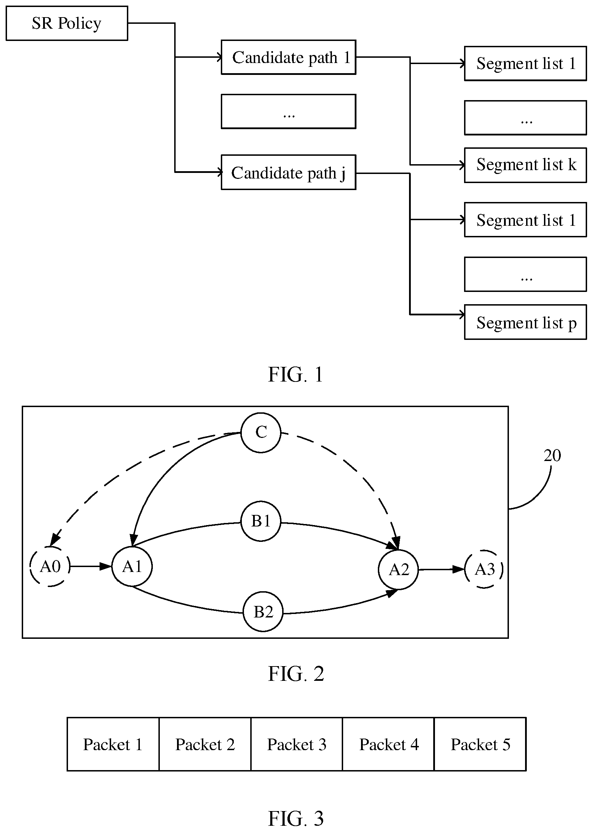

For example, refer to FIG. 1. FIG. 1 shows a three-layer structure of an SR policy and a relationship between the three-layer structure. As shown in FIG. 1, the SR policy includes J candidate paths (including a candidate path 1 to a candidate path j). The candidate path 1 includes K segment lists (including a segment list 1 to a segment list k), and the candidate path j includes P segment lists (including a segment list 1 to a segment list p). Herein, J, j, K, k, P, and p are all integers greater than or equal to 1, 1≤j≤J, 1≤k≤K, and 1≤p≤P.

When a preference value of the candidate path 1 is 200, and preference values of (j-1) candidate paths other than the candidate path 1 are all less than 200, the candidate path 1 may be an active forwarding path. In addition, if weights of the K segment lists included in the candidate path 1 are all 1, a ratio of quantities of packet flows processed in the segment list 1 to the segment list k is 1:1:...:1.

### (4) Other terms

In embodiments of this application, the word such as "example" or "for example" is used to represent giving an example, an illustration, or a description. Any embodiment or design solution described as an "example" or "for example" in embodiments of this application should not be explained as being more preferred or having more advantages than another embodiment or design solution. Exactly, use of the word "example", "for example" or the like is intended to present a relative concept in a specific manner.

In the descriptions of embodiments of this application, unless otherwise stated, "/" means "or". For example, A/B may represent A or B. The term "and/or" in this specification describes only an association relationship for describing associated objects and indicates that there may be three relationships. For example, A and/or B may represent the following three cases: Only A exists, both A and B exist, and only B exists. In addition, in the descriptions of this application, "a plurality of' refers to two or more than two unless otherwise specified.

Embodiments of this application provide an SR policy issuing method and apparatus and an SR policy receiving method and apparatus, and are applied to an SR network. By extending functions of an SR policy and an SID, the method implements multi-fed and selective receiving on a packet flow by using an SR technology. The SR policy issuing method provided in embodiments of this application provides a mechanism of supporting, at a control layer, in performing multi-fed and selective receiving on packets at a data layer, and improves reliability of packet flow transmission. The SR network may be an MPLS network or an IPv6-based segment routing protocol (SRv6) network. This is not limited in embodiments of this application.

In embodiments of this application, the SR policy having the extended function is referred to as a redundancy policy (redundancy policy). The redundancy policy may be an SR policy indicating a node to copy and forward a packet flow. For example, both a first SR policy and a second SR policy below in embodiments of this application are redundancy policies indicating a node to copy and forward a packet flow.

In embodiments of this application, the SID having the extended function is referred to as a redundancy SID (redundancy SID). At the data layer, a redundancy SID in a segment list of a packet may be an SID indicating to copy and forward a packet.

Refer to FIG. 2. An embodiment of this application provides a network architecture 20. The network architecture 20 may be applied to an SR network. The foregoing SR policy issuing method may be applied to the network architecture 20. As shown in FIG. 2, the network architecture 20 may include a path computation node C, a first node A1, and a second node A2. The path computation node C is reachable to each node in the network architecture 20.

The path computation node C is configured to: manage each node in the network architecture 20, and deliver an SR policy to each node in the network architecture 20. There are at least two different paths between the first node A1 and the second node A2, the at least two different paths may include a first path and a second path, and both the first path and the second path are used to transmit a packet flow. A source node of each of the first path and the second path is the first node A1, and a destination node of each of the first path and the second path is the second node A2. The first path and the second path are two different paths. The first path may pass through a node B1, and the second path may pass through a node B2.

The first path and the second path may have an active-standby path relationship. For example, the first path may be an active path, and correspondingly, the second path is a standby path. During packet flow transmission, in a normal case, the first node A1 transmits a packet flow through the first path. When the first path is unavailable (for example, a fault occurs on the node B1), the first node A1 transmits the packet through the second path.

Optionally, the network architecture 20 may further include a third node A3 and a fourth node A0. A direction shown by an arrow in FIG. 3 may indicate a direction of transmitting a packet flow. The packet flow may be transmitted in a direction of A0→A1→B1→A2→A3, or may be transmitted in a direction of A0→A1→B3→A2→A3.

It can be learned that the path computation node C is independent of other nodes. Certainly, the path computation node C may alternatively be any node in the network architecture 20. This is not limited in this embodiment of this application. For example, the path computation node C may be the node A0, the node A1, or the node A2 shown in FIG. 2. In this case, the node has a function of transmitting the packet flow and a function of delivering the SR policy to other nodes. In the following descriptions, an example in which the path computation node C is independent of other nodes is used for description in this embodiment of this application.

It may be understood that the foregoing packet flow may be a packet flow including n (where n is an integer greater than or equal to 1) packets. Packets in each packet flow may have a same source address and a same destination address, or may have a same quintuple. This is not limited in this embodiment of this application. The quintuple includes a source address, a source port, a destination address, a destination port, and a layer 4 protocol type.

Refer to FIG. 3. FIG. 3 shows a packet flow. The packet flow includes a packet 1, a packet 2, a packet 3, a packet 4, and a packet 5. The packet 1, the packet 2, the packet 3, the packet 4, and the packet 5 may have a same source address and a same destination address.

Each node in the foregoing network architecture 20 may be a physical machine (for example, a general-purpose computer), or a virtual machine run on a physical machine. This is not limited in this embodiment of this application.

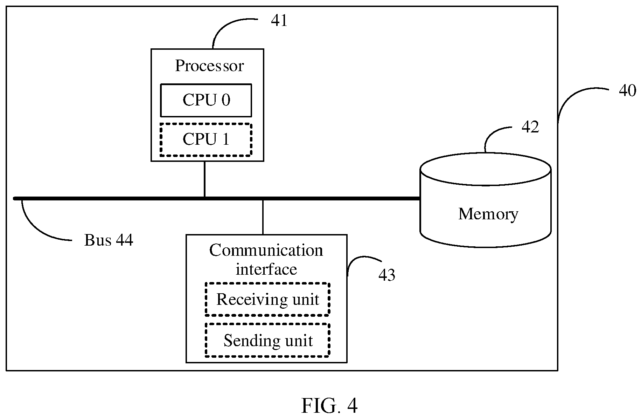

FIG. 4 is a schematic diagram of a structure of a computer device 40. The computer device 40 may be the path computation node in the foregoing network architecture 20, or may be any one of the first node, the second node, the third node, the fourth node, the node B1, or the node B2. As shown in FIG. 4, the computer device 40 includes a processor 41, a memory 42, a communication interface 43, and a bus 44. The processor 41, the memory 42, and the communication interface 43 may be connected through the bus 44.

The processor 41 is a control center of the computer device 40, and may be a general-purpose central processing unit (central processing unit, CPU), another general-purpose processor, or the like. The general-purpose processor may be a microprocessor, any conventional processor, or the like.

In an example, the processor 41 may include one or more CPUs, for example, a CPU 0 and a CPU 1 shown in FIG. 4.

The memory 42 may be a read-only memory (read-only memory, ROM) or another type of static storage device capable of storing static information and instructions, a random access memory (random access memory, RAM) or another type of dynamic storage device capable of storing information and instructions, an electrically erasable programmable read-only memory (electrically erasable programmable read-only memory, EEPROM), a magnetic disk storage medium or another magnetic storage device, or any other medium capable of carrying or storing expected program code in a form of instructions or a data structure and capable of being accessed by a computer, but is not limited thereto.

In a possible implementation, the memory 42 may be independent of the processor 41. The memory 42 may be connected to the processor 41 through the bus 44, and is configured to store data, instructions, or program code. When invoking and executing the instructions or the program code stored in the memory 42, the processor 41 can implement the SR policy issuing method provided in embodiments of this application.

In another possible implementation, the memory 42 may alternatively be integrated with the processor 41.

The communication interface 43 is configured to connect the computer device 40 to another device (such as the path computation node, the first node, or the second node) through a communication network. The communication network may be an Ethernet, a radio access network (radio access network, RAN), a wireless local area network (wireless local area network, WLAN), or the like. The communication interface 43 may include a receiving unit configured to receive data and a sending unit configured to send data.

The bus 44 may be an industry standard architecture (industry standard architecture, ISA) bus, a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 4, but this does not mean that there is only one bus or only one type of bus.

It should be noted that the structure shown in FIG. 4 does not constitute a limitation on the computer device. In addition to the components shown in FIG. 4, the computer device 40 may include more or fewer components than those shown in the figure, or some components may be combined, or a different component layout may be used.

With reference to the accompanying drawings, the following describes the SR policy issuing method provided in embodiments of this application. The SR policy issuing method provided in embodiments of this application may be applied to the network architecture 20 shown in FIG. 2.

In the method, the first node A1 has a capability of copying and forwarding a packet flow, and the second node A2 has a capability of forwarding and deleting a packet flow. The first node A1 may flood first capability information, and the first capability information includes information about the capability of copying and forwarding the packet flow by the first node. The second node A2 may flood second capability information, and the second capability information includes information about the capability of forwarding and deleting the packet flow by the second node. Optionally, both the first node A1 and the second node A2 may flood respective capability information during network construction. Correspondingly, the path computation node C may obtain the first capability information and the second capability information.

In addition, the second node may further issue routing information, where the routing information may include a prefix and a policy identity. Certainly, the routing information may further include an IP address of the second node. The prefix may be a prefix of a group of destination IP addresses reachable to the second node. Optionally, the second node may issue the routing information according to a BGP protocol during network construction. Correspondingly, the first node may receive and store the routing information.

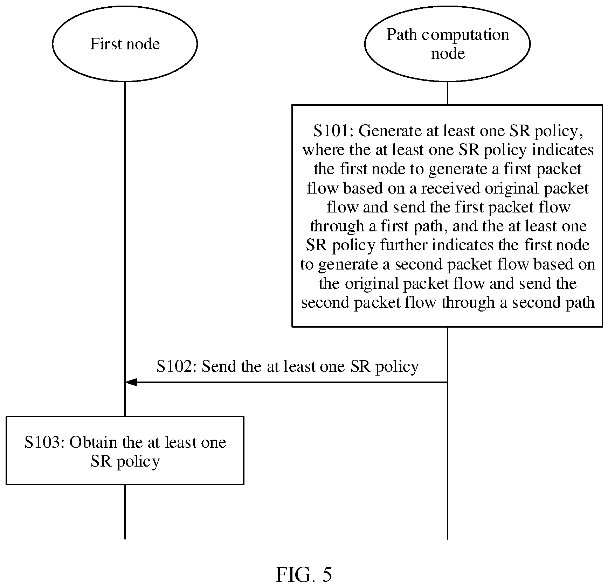

FIG. 5 is a schematic flowchart of an SR policy issuing method according to an embodiment of this application. The method includes the following steps.

S101: A path computation node generates at least one SR policy, where the at least one SR policy indicates a first node to generate a first packet flow based on a received original packet flow and send the first packet flow through a first path, and the at least one SR policy further indicates the first node to generate a second packet flow based on the original packet flow and send the second packet flow through a second path.

A payload of the packet in the first packet flow is the same as a payload of the packet in the second packet flow, and each of the payload of the packet in the first packet flow and the payload of the packet in the second packet flow is a payload in the original packet flow. Herein, the at least one SR policy is a redundancy policy indicating a node to copy and forward a packet flow.

The at least one SR policy may further indicate the first node to add a type-length-value TLV field to each of the packet of the first packet flow and the packet of the second packet flow. The TLV field includes a redundant parameter. Herein, the redundant parameter may indicate the second node to delete a redundant packet from the first packet flow and the second packet flow that are received.

In an example, the redundant parameter may be flow identification (flow identification) and a sequence number (sequence number). The flow identification may indicate that the first packet flow and the second packet flow each are a packet flow sent in a multi-fed and selective receiving manner. The sequence number may be used to distinguish between packets with different payloads. That is, packets with a same payload have a same sequence number.

Specifically, the at least one SR policy may include policy type information and policy content.

The policy type information of the at least one SR policy may include a first SID. The first SID is a redundancy SID having an extended function of copying and forwarding a packet, and indicates, at a data layer, the first node to process a packet flow according to a first SR policy corresponding to the first SID. The first SID may be generated by the path computation node, or may be generated by the first node. This is not limited. When the first SID is generated by the first node, the first node may generate and issue the first SID before receiving the first SR policy. For example, the first node may generate the first SID during network construction, and flood (that is, issue) the first SID according to an extended interior gateway protocol (Interior Gateway Protocol, IGP) or border gateway protocol-link state (Border Gateway Protocol Link-State, BGP-LS).

For example, the first SID may be an MPLS label, and the label may be a local identification label or a global identification label. The label may indicate, at the data layer, the first node to copy and forward the packet. Global identification means that all nodes in an MPLS network in which the first node is located may identify that the label is a label corresponding to the first node. The first SID may alternatively indicate an IPv6 address of the first node, and indicate the first node to copy and forward the packet.

The first SID may indicate the first node to determine the at least one SR policy corresponding to a packet in the original packet flow. Herein, the packet in the original packet flow includes the first SID. In this case, the first node may process the received original packet flow according to the at least one SR policy.

For example, refer to FIG. 2. If a packet in a packet flow sent by the fourth node A0 to the first node A1 includes the first SID, the first node A1 may determine the at least one SR policy corresponding to the packet flow, and then process the packet according to the at least one SR policy.

The policy type information of the at least one SR policy may further include a policy identity.

In a possible implementation, when routing information received by the first node includes a prefix and the policy identity, the policy identity may indicate the first node to establish a correspondence between the prefix and the first SID. When the packet of the original packet flow matches the prefix, the policy identity may indicate the first node to determine, based on the correspondence, the first SID corresponding to the original packet flow, namely, the at least one SR policy corresponding to the original packet flow. Certainly, the routing information may further include an IP address of a node that issues the routing information. In this case, the policy type information may also include the IP address. For related descriptions of the routing information, refer to the foregoing descriptions. Details are not described herein again.

In another possible implementation, the policy identity may uniquely identify one SR policy. In this case, when the routing information received by the first node includes a prefix and the policy identity, the first node may determine, based on the policy identity, the at least one SR policy corresponding to the original packet flow. Herein, the packet of the original packet flow matches the prefix in the routing information.

It should be noted that the policy identity may be attribute information, for example, attribute information indicating to copy and forward the packet. It should be noted that the policy identity may be reused with attribute information (namely, color information) in the SR policy. This is not limited. The color information in the SR policy may represent an SR policy attribute, for example, an attribute such as a low latency or high reliability. Details are not described herein.

The policy content of the at least one SR policy may include m candidate paths, and m is an integer greater than or equal to 2. A source node of each of the m candidate paths is the first node, a destination node of each of the m candidate paths is the second node, and the m candidate paths are different forwarding paths between the first node and the second node. In an example, m may be 2. Refer to FIG. 3. An example in which the policy content of the at least one SR policy includes two candidate paths is used for description in this embodiment of this application.

Specifically, the policy content of the at least one SR policy includes a first candidate path and a second candidate path, the first candidate path may be a first path, and the first candidate path includes a first segment list. The second candidate path may be a second path, and the second candidate path includes a second segment list. The first packet flow may be obtained based on the original packet flow and the first segment list, and the second packet flow may be obtained based on the original packet flow and the second segment list. Certainly, this is not limited thereto.

The following uses an example in which the first packet flow is obtained based on the original packet flow and the first segment list, and the second packet flow is obtained based on the original packet flow and the second segment list for description. In this case, the packet of the first packet flow includes the first segment list, and the packet of the second packet flow includes the second segment list. In this embodiment of this application, the first packet flow and the second packet flow may be obtained in any one of the following manners.

Manner 1: The first node obtains the first packet flow based on the first segment list and the original packet flow. In addition, the first node copies the original packet flow, and obtains the second packet flow based on the second segment list and the copied original packet flow.

Manner 2: The first node copies the original packet flow, and obtains the first packet flow based on the first segment list and the copied original packet flow. In addition, the first node obtains the second packet flow based on the second segment list and the original packet flow.

Manner 3: The first node copies the original packet flow, and obtains the first packet flow based on the first segment list and the copied original packet flow. In addition, the first node copies the original packet flow, and obtains the second packet flow based on the second segment list and the copied original packet flow.

Then, the first node adds, to each of the packet of the first packet flow and the packet of the second packet flow, the TLV field including the redundant parameter, where the first packet flow and the second packet flow are obtained in any one of the foregoing manners. Certainly, the first node may alternatively add, to the packet of the original packet flow, the TLV field including the redundant parameter, and then obtain, in any one of the foregoing manners, the first packet flow and the second packet flow based on the original packet flow to which the TLV field is added.

For a specific process of obtaining the first packet flow and the second packet flow, refer to the following descriptions. Details are not described herein again.

The first segment list and the second segment list each include a second SID, and the second SIDs are last segment identities in the first segment list and the second segment list. For related descriptions of the second SID, refer to the following descriptions. Details are not described herein again.

The second SID may be generated by the path computation node, or may be generated by the second node. This is not limited in this embodiment of this application. If the second SID is generated by the second node, the path computation node receives, before generating the at least one SR policy, the second SID issued (for example, flooded) by the second node. For example, the path computation node may receive the second SID flooded by the second node according to the extended IGP or BGP-LS protocol. In addition, the first candidate path and the second candidate path may be included in policy content of one SR policy, or may be included in policy content of different SR policies. This is not limited in this embodiment of this application.

Optionally, the at least one SR policy may include the first SR policy, and policy content of the first SR policy may include the first candidate path and the second candidate path. In addition, the first candidate path and the second candidate path have a same preference value (preference value), indicating that the first candidate path and the second candidate path may be used to forward the packets. In other words, the first candidate path and the second candidate path are a group of two paths for implementing multi-fed and selective receiving of the packet flow.

For example, refer to FIG. 3. The policy content of the first SR policy may be expressed as follows:

### Candidate path 1<B1, A2> and Candidate path 2<B2, A2>.

"Candidate path 1" may represent a candidate path 1, and "Candidate path 2" may represent a candidate path 2. "<B1, A2>" may represent a segment list of the candidate path 1, and "<B2, A2>" may represent a segment list of the candidate path 2. "B1" may represent an MPLS label of the node B1 (namely, an SID of the node B1), and "A2" may represent an MPLS label of the node A2 (namely, a second SID of the node A2). In addition, "Candidate path 1" and "Candidate path 2" have a same preference value, indicating that "Candidate path 1" and "Candidate path 2" are a group of two paths for implementing multi-fed and selective receiving of the packet flow.

Optionally, the at least one SR policy may include the first SR policy and a second SR policy, policy content of the first SR policy may include the first candidate path, policy content of the second SR policy may include the second candidate path, and the first candidate path is different from the second candidate path. The first SR policy and the second SR policy have a same attribute value, indicating that the first candidate path and the second candidate path may be used to forward the packets. In other words, the first candidate path and the second candidate path are a group of two paths for implementing multi-fed and selective receiving of the packet flow.

For example, refer to FIG. 3. The policy content of the first SR policy may be expressed as Candidate path 1<B1, A2>, and the policy content of the second SR policy may be expressed as Candidate path 2<B2, A2>.

"Candidate path 1" may represent a candidate path 1, and "Candidate path 2" may represent a candidate path 2. "<B1, A2>" represents a segment list of the candidate path 1, and "<B2, A2>" represents a segment list of the candidate path 2. "B1" may represent an MPLS label of the node B1 (namely, an SID of the node B1), and "A2" may represent an MPLS label of the node A2 (namely, a second SID of the node A2). In addition, the first SR policy and the second SR policy have a same attribute value, indicating that "Candidate path 1" and "Candidate path 2" are a group of two paths for implementing multi-fed and selective receiving of the packet flow.

S102 (optional): The path computation node sends the at least one SR policy to the first node.

When the path computation node and the first node are not a same node, the path computation node may send the at least one SR policy to the first node according to an extended path computation element protocol (Path Computation Element Protocol, PCEP) or a border gateway protocol (Border Gateway Protocol, BGP).

S103: The first node obtains the at least one SR policy.

Optionally, when the path computation node and the first node are not the same node, the first node receives the first SR policy sent by the path computation node, to obtain the at least one SR policy.

Optionally, when the path computation node and the first node are the same node, the at least one SR policy generated by the path computation node is the at least one SR policy obtained by the first node.

S104: The first node establishes a correspondence between a prefix and the first SID in the at least one SR policy based on received routing information issued by the second node.

The routing information may include a policy identity and the prefix.

After receiving the at least one SR policy, the first node determines that the policy identity in the at least one SR policy matches the policy identity in the routing information. In this case, the first node establishes the correspondence between the prefix in the routing information and the first SID in the at least one SR policy.

It may be understood that the correspondence is applied to a data layer. When the destination address in the original packet flow matches the prefix in the routing information, the first node may determine, based on the correspondence, the first SID corresponding to the original packet flow, namely, the at least one SR policy corresponding to the original packet flow. Further, the first node may process the original packet flow according to the at least one SR policy.

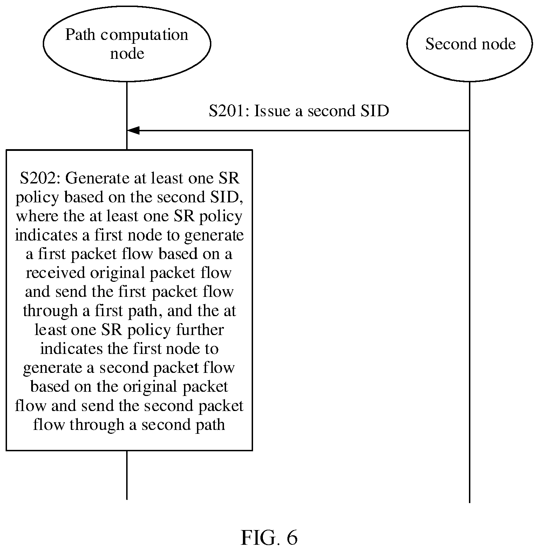

FIG. 6 is a schematic flowchart of another SR policy issuing method according to an embodiment of this application. The method includes the following steps.

S201: A second node issues a second SID.

The second node may flood the second SID according to an extended IGP or BGP-LS protocol.

The second SID is used by a path computation node to generate at least one SR policy. For related descriptions of the at least one SR policy, refer to S101. Details are not described herein again.

The second SID may be generated by the second node. This is not limited. When the second node is a destination node of packet flow transmission, the second SID indicates the second node to delete (or discard) a redundant packet. When the second node is not a destination node of packet flow transmission (for example, the destination node of a packet flow is a third node A6), the second SID indicates the second node to forward a non-redundant packet and delete (or discard) a redundant packet.

For example, the second node is not the destination node of the packet flow transmission. The second SID may be an MPLS label, and the label may indicate the second node to forward the non-redundant packet and delete (or discard) the redundant packet. The second node may alternatively indicate an IPv6 address of the second node, and indicate the second node to forward the non-redundant packet and delete (or discard) the redundant packet.

S202: A path computation node generates the at least one SR policy based on the second SID, where the at least one SR policy indicates a first node to generate a first packet flow based on a received original packet flow and send the first packet flow through a first path, and the at least one SR policy further indicates the first node to generate a second packet flow based on the original packet flow and send the second packet flow through a second path.

For a description of generating, by the path computation node, the at least one SR policy, refer to S101. Details are not described herein again.

S203 (optional): The path computation node generates a third SR policy, where the third SR policy includes the second SID.

When the second node is not the destination node of the packet flow transmission (for example, the destination node of the packet flow is the third node A6), the path computation node generates the third SR policy.

The third SR policy may include a third candidate path, the third candidate path may be a third path, the third candidate path includes a third segment list, the third segment list includes a third SID, and the third SID may be a last segment identity in the third segment list. The third SID may indicate the third node to receive a packet flow. The third SID may be generated by the path computation node, or may be generated by the third node. This is not limited. When the third SID is generated by the third node, the path computation node receives, before generating the third SR policy, the third SID issued (for example, flooded) by the third node. For example, during network construction, the path computation node may receive the third SID flooded by the third node according to the IGP protocol or the BGP-LS protocol.

The third SR policy may further include the second SID. The second SID may be generated by the path computation node, or may be generated by the second node. This is not limited. The second SID indicates the second node to determine the third SR policy corresponding to a packet flow received by the second node. Herein, the packet flow received by the second node includes the second SID.

The third SR policy indicates the second node to forward the non-redundant packet and delete the redundant packet through the third path. A packet in the packet flow received by the second node includes a TLV field, the TLV field includes a redundant parameter, and the redundant parameter indicates the redundant packet. For example, the redundant parameter may be flow identification and a sequence number. In this case, the second node may determine the redundant packet and the non-redundant packet based on the redundant parameter in the received packet flow.

The following uses an example in which the second node receives the first packet flow and the second packet flow in S102 for description. A packet of the first packet flow and a packet of the second packet flow each include the second SID. Therefore, the second node determines to process the first packet flow and the second packet flow according to the third SR policy.

For example, the first packet flow includes a packet 1, and the second packet flow includes a packet 1'. In this case, when receiving the packet 1, the second node determines, based on a redundant parameter in the packet 1, that the packet 1 is the non-redundant packet. Then, the second node generates a packet 1" based on the packet 1 and the third segment list. Then, the second node sends the packet 1" through the third path. When receiving the packet 1', if determining, based on a redundant parameter in the packet 1', that the packet 1' is the redundant packet, the second node deletes (or discards) the packet 1'.

S204 (optional): The path computation node sends the third SR policy to the second node.

Optionally, when the path computation node and the second node are not a same node, the path computation node may send the third SR policy to the second node according to an extended PCEP protocol or BGP protocol.

The second node receives the third SR policy in response to an operation by the path computation node.

The SR policy issuing method provided in embodiments of this application is described above.

When a source node of a packet flow on which multi-fed and selective receiving is performed by using the method is not the first node, for example, the source node of the packet flow is the fourth node A0 in the network architecture 20, at a data layer, a segment list of a packet in the packet flow sent by A0 to the first node may include the first SID, or a prefix having a correspondence with the first SID may match a destination address of the packet. In this way, the packet may be transmitted between the first node and the second node in a multi-fed and selective receiving manner.

When the source node of the packet flow on which multi-fed and selective receiving is performed by using the method is the first node A1, the at least one SR policy sent by the path computation node to the first node in S103 is used to control the first node to process, according to the at least one SR policy, one or more packet flows whose source node is the first node, to implement multi-fed and selective receiving of the one or more packet flows whose source node is the first node. That is, the at least one SR policy corresponds to the one or more packet flows whose source node is the first node.

With reference to the example at the data layer, the following describes application of the SR policy issuing method provided in embodiments of this application.

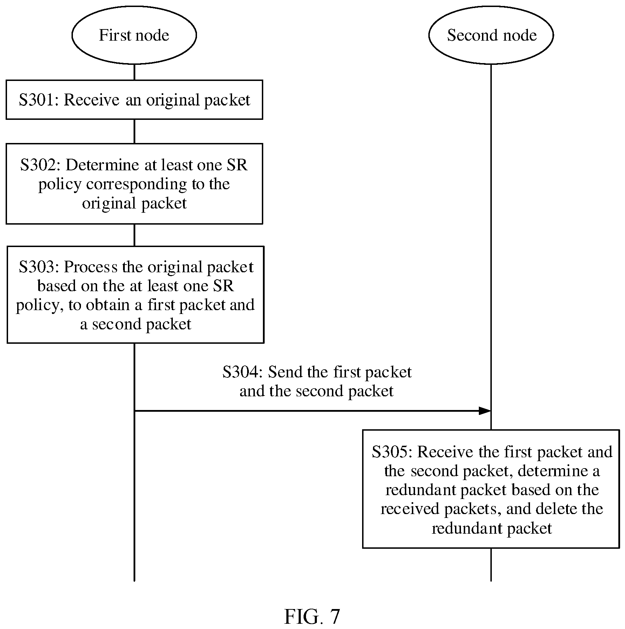

FIG. 7 shows a packet forwarding method according to an embodiment of this application. The method may be applied to the network architecture 20 shown in FIG. 2, and the method is implemented based on the foregoing SR policy issuing method. For example, the method is applied to an MPLS network. The method includes the following steps.

S301: A first node receives an original packet.

In a possible implementation, the original packet includes a first SID (namely, the first SID in S101).

Herein, a label stack of the original packet may be referred to as an original label stack, and the original label stack includes a label (referred to as a first label, namely, the first SID) corresponding to the first node.

In another possible implementation, the original label stack of the original packet includes a destination address.

S302: The first node determines at least one SR policy corresponding to the original packet.

In a possible implementation, the first node determines, based on the first SID in the original packet, that the at least one SR policy including the first SID is the at least one SR policy corresponding to the original packet.

In another possible implementation, the first node determines the first SID corresponding to the original packet based on a prefix matching the destination address of the original packet and the correspondence between the prefix and the first SID in S103. Then, the first node determines that the at least one SR policy including the first SID is the at least one SR policy corresponding to the original packet.

S303: The first node processes the original packet according to the at least one SR policy, to obtain a first packet and a second packet.

For related descriptions of the at least one SR policy, refer to the descriptions in S101. Details are not described herein again.

The at least one SR policy includes a first SR policy, the first SR policy includes a first candidate path and a second candidate path, the first candidate path includes a first segment list, the second candidate path includes a second segment list, and the last SIDs in the first segment list and the second segment list each are a second SID (namely, the second SID in S101 and S201). In this case, S303 may include: The first node obtains the first packet based on the first segment list and the original packet; and the first node copies the original packet, and obtains the second packet based on the second segment list and the copied original packet.

The following describes, by using examples, a specific process in which "the first node obtains the first packet based on the original packet and the first segment list". Certainly, this is not limited thereto. The process may include the following steps:
In a possible implementation, if the original label stack includes the first SID, the first node pops the first SID from the original label stack of the original packet; and then sequentially adds SIDs in the first segment list to the original label stack to obtain a first label stack. A label at an outermost layer of the first label stack is the first SID in the first segment list. The original packet including the first label stack is the first packet. It can be learned that the first packet includes the first segment list.

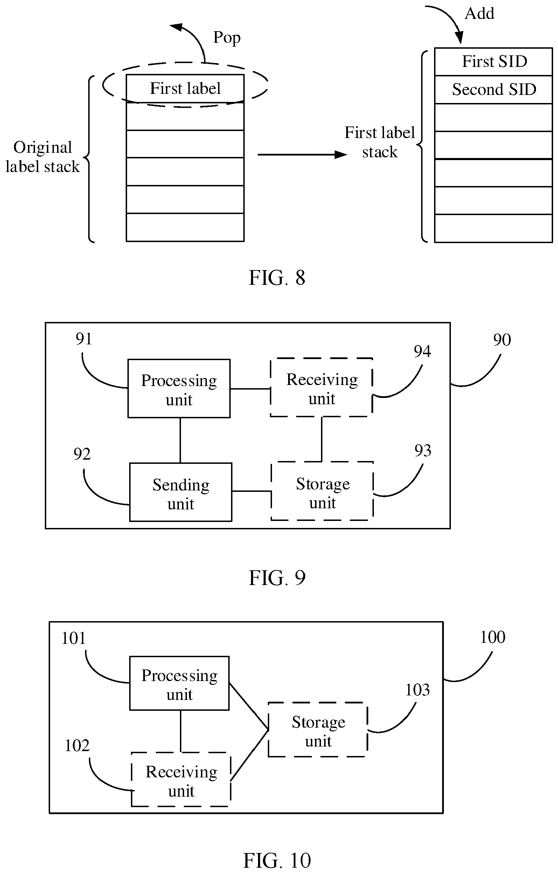

For example, refer to FIG. 8. If the first candidate path is "Candidate path 1<B1, A2>", the first segment list is "<B1, A2>", the first SID in the first segment list is "B1", and the second SID is "A2". In this case, the first node sequentially adds the SIDs in the first segment list to the original label stack to obtain the first label stack, as shown in FIG. 8. The label at the outermost layer of the first label stack is the first SID "B1" in the first segment list, and a label at a secondary outer layer of the first label stack is the second SID "A2" in the first segment list.

Optionally, if the first label stack does not include a TLV field, the first node further adds the TLV field to the first label stack based on an indication of the first SR policy. Certainly, the first node may alternatively add the TLV field to the original label stack, then pop the first SID, and sequentially add the SIDs in the first segment list to the original label stack, to obtain the first label stack. The TLV field includes a redundant parameter (for example, flow identification and a sequence number), and the redundant parameter indicates a redundant packet, or indicates to delete a redundant packet. When the redundant parameter indicates to delete the redundant packet, the second SID may be an SID indicating to forward and receive the packet.

Similarly, for a specific process in which the first node obtains the second packet based on the copied original packet and the second segment list, refer to the foregoing process of obtaining the first packet. Details are not described herein again. It can be learned that the second packet includes the second segment list.

In another possible implementation, the original label stack does not include the first SID. In this case, the first node may obtain the first packet and the second packet with reference to the foregoing possible implementations. When obtaining the first packet and the second packet with reference to the foregoing possible implementations, the first node does not need to pop the first SID.

S304: The first node sends the first packet and the second packet.

Specifically, the first node may send the first packet through the first candidate path and the second packet through the second candidate path based on an indication of the at least one SR policy. Alternatively, the first node may send the second packet through the first candidate path and the first packet through the second candidate path based on an indication of the at least one SR policy.

S305: The second node receives the first packet and the second packet, determines a redundant packet based on the received packets, and deletes the redundant packet.

The first packet includes the first segment list, and therefore the first packet includes the second SID. The second packet includes the second segment list, and therefore the second packet includes the second SID.

In a possible implementation, the second node deletes the redundant packet based on an indication of the second SID.

Specifically, the second node identifies a sequence number of the first packet based on the label stack of the first packet, and determines whether the sequence number of the first packet is in a sequence number list stored in the second node. If the sequence number of the first packet is in the sequence number list stored in the second node, the second node determines that the first packet is the redundant packet, and deletes (or discards) the second packet, or if the sequence number of the first packet is not in the sequence number list stored in the second node, the second node determines that the first packet is a non-redundant packet, and saves the second packet.

Similarly, the second node processes the second packet in a same manner. Details are not described herein again.

In another possible implementation, the second node processes the first packet and the second packet according to a third SR policy corresponding to the second SID (corresponding to the third SR policy in S201). The third SR policy includes a third candidate path, and the third candidate path includes a third segment list.

Specifically, based on an indication of the third SR policy, the second node forwards a non-redundant packet in the first packet and the second packet and deletes the redundant packet through the third candidate path. For a process in which the second node determines the redundant packet and the non-redundant packet, refer to the descriptions in the foregoing first possible implementation. Details are not described herein again. Then, the second node forwards the non-redundant packet and deletes the redundant packet through the third candidate path.

A process in which the second node forwards the non-redundant packet through the third candidate path may include: The second node obtains a third packet based on the non-redundant packet and the third segment list, and forwards the third packet through the third candidate path. For a process in which the second node obtains the third packet based on the non-redundant packet and the third segment list, refer to the foregoing process of obtaining the first packet. Details are not described herein again.

In conclusion, this application provides the SR policy issuing method, applied to the SR network. By extending the functions of the SR policy and the SID, the method implements multi-fed and selective receiving on the packet flow on a control side by using the SR technology, provides the mechanism of supporting, at the control layer, in performing multi-fed and selective receiving on the packets at the data layer, and improves the reliability of the packet flow transmission.

The foregoing mainly describes the solutions provided in embodiments of this application from a perspective of the methods. To implement the foregoing functions, the solutions include corresponding hardware structures and/or software modules for performing the functions. A person skilled in the art should be easily aware that with reference to units and algorithm steps in the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the path computation node, the first node, and the second node may be divided into functional modules based on the foregoing method examples. For example, each functional module may be obtained through division based on a corresponding function, or two or more functions may be integrated into one processing module. The integrated module may be implemented in a form of hardware, or may be implemented in a form of a software functional module. It should be noted that in embodiments of this application, module division is an example, and is merely a logical function division. During actual implementation, another division manner may be used.

FIG. 9 is a schematic diagram of a structure of a path computation node 90 according to an embodiment of this application. The path computation node 90 is applied to an SR network, and the SR network further includes a first node and a second node. A first path and a second path that are different from each other exist between the first node and the second node. A source node of each of the first path and the second path is the first node, and a destination node of each of the first path and the second path is the second node. The path computation node 90 is configured to perform the foregoing SR policy issuing method, for example, is configured to perform the method shown in FIG. 5 or FIG. 6. The path computation node 90 may include a processing unit 91 and a sending unit 92.

The processing unit 91 is configured to generate at least one SR policy. The sending unit 92 is configured to send the at least one SR policy to the first node, where the at least one SR policy indicates the first node to generate a first packet flow based on a received original packet flow and send the first packet flow through the first path; and the at least one SR policy further indicates the first node to generate a second packet flow based on the original packet flow and send the second packet flow through the second path.

In an example, with reference to FIG. 5, the processing unit 91 may be configured to perform S101, and the sending unit 92 may be configured to perform S102.

Optionally, the at least one SR policy includes a first segment identity SID, a packet of the original packet flow includes the first SID, and the first SID indicates the first node to determine the at least one SR policy corresponding to the original packet flow.

Optionally, the at least one SR policy further includes a policy identity, routing information received by the first node includes the policy identity and a prefix, the packet of the original packet flow matches the prefix, and the policy identity indicates the first node to determine the at least one SR policy corresponding to the original packet flow.

Optionally, the at least one SR policy includes a first candidate path and a second candidate path, the first candidate path includes a first segment list, and the second candidate path includes a second segment list. The first candidate path is the first path, the second candidate path is the second path, a packet of the first packet flow includes the first segment list, and a packet of the second packet flow includes the second segment list.

Optionally, the at least one SR policy includes a first SR policy, the first SR policy includes the first candidate path and the second candidate path, and a preference preference value of the first candidate path is the same as a preference preference value of the second candidate path. Alternatively, the at least one SR policy includes a first SR policy and a second SR policy, the first SR policy includes the first candidate path, the second SR policy includes the second candidate path, and an attribute value of the first policy is the same as an attribute value of the second policy.

Optionally, the processing unit 91 is further configured to obtain a second SID; or the path computation node further includes a receiving unit 94, configured to receive a second SID. The processing unit 91 is specifically configured to generate the at least one SR policy based on the second SID, where a segment list of the at least one SR policy includes the second SID, and the second SID in the segment list of the at least one SR policy indicates the second node to delete a redundant packet from the first packet flow and the second packet flow that are received.

In an example, with reference to FIG. 5, the processing unit 91 may be configured to perform S101.

Optionally, the SR network further includes a third node. A third path exists between the second node and the third node, a source node of the third path is the second node, and a destination node of the third path is the third node.

The sending unit 92 is further configured to send a third SR policy to the second node. The third SR policy includes a third candidate path, the third candidate path is the third path, and the third SR policy indicates the second node to forward a non-redundant packet through the third path. The non-redundant packet is obtained based on the first packet flow and the second packet flow. The third SR policy further includes the second SID, and the second SID indicates the second node to determine the third SR policy corresponding to the first packet flow and the third SR policy corresponding to the second packet flow.

In an example, with reference to FIG. 6, the sending unit 92 may be configured to perform S203.

Optionally, the sending unit 92 is specifically configured to send the at least one SR policy to the first node according to a path computation element protocol PCEP or a border gateway protocol BGP.

In an example, with reference to FIG. 5, the sending unit 92 may be configured to perform S102.

Optionally, the at least one SR policy further indicates the first node to add a type-length-value TLV field to each of the packet of the first packet flow and the packet of the second packet flow. The TLV field includes a redundant parameter, and the redundant parameter indicates the second node to delete a redundant packet from the first packet flow and the second packet flow that are received.

Optionally, a payload of the packet in the first packet flow is the same as a payload of the packet in the second packet flow, and each of the payload of the packet in the first packet flow and the payload of the packet in the second packet flow is a payload in the original packet flow.

Certainly, the path computation node 90 provided in this embodiment of this application includes but is not limited to the foregoing units. For example, the path computation node 90 may further include a storage unit 93. The storage unit 93 may be configured to store program code and the like of the path computation node 90.

For specific descriptions of the foregoing optional manners, refer to the foregoing method embodiments. Details are not described herein again. In addition, for any explanation of the path computation node 90 provided above and descriptions of beneficial effects, refer to the foregoing corresponding method embodiments. Details are not described herein again.

In an example, with reference to FIG. 4, a function implemented by the processing unit 91 in the path computation node 90 may be implemented by the processor 41 in FIG. 4 by executing the program code in the memory 42 in FIG. 4. Functions implemented by the sending unit 92 and the receiving unit 94 may be implemented by the communication interface 43 in FIG. 4, and a function implemented by the storage unit 93 may be implemented by the memory 42 in FIG. 4.

FIG. 10 is a schematic diagram of a structure of a first node 100 according to an embodiment of this application. The first node 100 is applied to an SR network, and the SR network further includes a second node. A first path and a second path that are different from each other exist between the first node and the second node, a source node of each of the first path and the second path is the first node, and a destination node of each of the first path and the second path is the second node. The first node 100 is configured to perform the foregoing SR policy receiving method, for example, is configured to perform the method shown in FIG. 5. The first node 100 may include a processing unit 101.

The processing unit 101 is configured to obtain at least one SR policy, where the at least one SR policy indicates the first node to generate a first packet flow based on a received original packet flow and send the first packet flow through the first path, and the at least one SR policy further indicates the first node to generate a second packet flow based on the original packet flow and send the second packet flow through the second path.

In an example, with reference to FIG. 5, the processing unit 101 may be configured to perform S103.

Optionally, the SR network further includes a path computation node. The first node 100 further includes a receiving unit 102, configured to receive the at least one SR policy sent by the path computation node. Alternatively, the processing unit 101 is specifically configured to generate the at least one SR policy.

In an example, with reference to FIG. 5, the processing unit 101 may be configured to perform S103.

Optionally, the at least one SR policy includes a first segment identity SID, a packet of the original packet flow includes the first SID, and the first SID indicates the first node to determine the at least one SR policy corresponding to the original packet flow.

Optionally, the at least one SR policy includes a policy identity. The receiving unit 102 is further configured to receive routing information sent by the second node, where the routing information includes the policy identity and a prefix, a packet of the original packet flow matches the prefix, and the policy identity indicates the first node to determine the at least one SR policy corresponding to the original packet flow.

Certainly, the first node 100 provided in this embodiment of this application includes but is not limited to the foregoing units. For example, the first node 100 may further include a storage unit 103. The storage unit 103 may be configured to store program code and the like of the first node 100.

For specific descriptions of the foregoing optional manners, refer to the foregoing method embodiments. Details are not described herein again. In addition, for any explanation of the first node 100 provided above and descriptions of beneficial effects, refer to the foregoing corresponding method embodiments. Details are not described herein again.

In an example, with reference to FIG. 4, a function implemented by the processing unit 101 in the first node 100 may be implemented by the processor 41 in FIG. 4 by executing the program code in the memory 42 in FIG. 4. A function implemented by the receiving unit 102 may be implemented by the communication interface 43 in FIG. 4, and a function implemented by the storage unit 103 may be implemented by the memory 42 in FIG. 4.

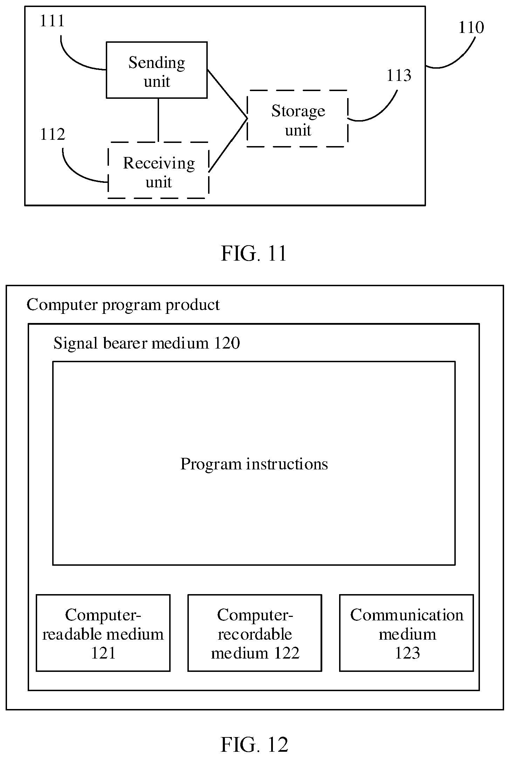

FIG. 11 is a schematic diagram of a structure of a second node 110 according to an embodiment of this application. The second node 110 is applied to an SR network, and the SR network further includes a path computation node and a first node. A first path and a second path exist between the first node and the second node. A source node of each of the first path and the second path is the first node, and a destination node of each of the first path and the second path is the second node. The second node 110 is configured to perform the foregoing segment identity issuing method, for example, is configured to perform the method shown in FIG. 6. The second node 110 may include a sending unit 111.

The sending unit 111 is configured to issue a second segment identity SID. The second SID is used by the path computation node to generate at least one SR policy, the at least one SR policy indicates the first node to generate a first packet flow based on a received original packet flow and send the first packet flow through the first path, and the at least one SR policy further indicates the first node to generate a second packet flow based on the original packet flow and send the second packet flow through the second path. Packets of the first packet flow and the second packet flow include the second SID, and the second SID in the packets of the first packet flow and the second packet flow indicates the second node to delete a redundant packet from the first packet flow and the second packet flow that are received.

In an example, with reference to FIG. 6, the sending unit 111 may be configured to perform S201.

Optionally, the sending unit 111 is further configured to issue routing information, where the routing information includes a policy identity and a prefix, a packet of the original packet flow matches the prefix, and the policy identity indicates the first node to determine the at least one SR policy corresponding to the original packet flow.

Optionally, the SR network further includes a third node, a third path exists between the second node and the third node, a source node of the third path is the second node, and a destination node of the third path is the third node.

The second node further includes a receiving unit 112, configured to receive the third SR policy sent by the path computation node. The third SR policy includes a third candidate path, the third candidate path is the third path, and the third SR policy indicates the second node to forward a non-redundant packet through the third path. The non-redundant packet is obtained based on the first packet flow and the second packet flow. The third SR policy further includes the second SID, and the second SID indicates the second node to determine the third SR policy corresponding to the first packet flow and the third SR policy corresponding to the second packet flow.

In an example, with reference to FIG. 6, the receiving unit 112 may be configured to respond to S203.

Optionally, each of the packet of the first packet flow and the packet of the second packet flow includes a type-length-value TLV field, the TLV field includes a redundant parameter, and the redundant parameter indicates the redundant packet.

Optionally, the second SID is generated by the second node. The sending unit 111 is specifically configured to flood the second SID according to an IGP protocol or a BGP-LS protocol.

In an example, with reference to FIG. 6, the sending unit 111 may be configured to perform S201.

Certainly, the second node 110 provided in this embodiment of this application includes but is not limited to the foregoing units. For example, the second node 110 may further include a storage unit 113. The storage unit 113 may be configured to store program code and the like of the second node 110.

For specific descriptions of the foregoing optional manners, refer to the foregoing method embodiments. Details are not described herein again. In addition, for any explanation of the second node 110 provided above and descriptions of beneficial effects, refer to the foregoing corresponding method embodiments. Details are not described herein again.

In an example, with reference to FIG. 4, functions implemented by the sending unit 111 and the receiving unit 112 in the second node 110 may be implemented by the communication interface 43 in FIG. 4, and a function implemented by the storage unit 113 may be implemented by the memory 42 in FIG. 4.

Another embodiment of this application further provides a computer-readable storage medium. The computer-readable storage medium stores instructions. When the instructions are run on a path computation node, a first node, or a second node, the path computation node, the first node, or the second node performs steps performed by the path computation node, the first node, or the second node in the method procedure shown in the foregoing method embodiments.

In some embodiments, the disclosed method may be implemented as computer program instructions encoded in a machine-readable format on a computer-readable storage medium or encoded on another non-transitory medium or product.

FIG. 12 schematically shows a conceptual partial view of a computer program product according to an embodiment of this application. The computer program product includes a computer program used to execute a computer process on a computing device.

In an embodiment, the computer program product is provided by using a signal bearer medium 120. The signal bearer medium 120 may include one or more program instructions. When the one or more program instructions are run by one or more processors, the functions or some of the functions described for FIG. 5, FIG. 6, or FIG. 7 may be provided. Therefore, for example, one or more features of S101 to S103 in FIG. 5 may be borne by one or more instructions associated with the signal bearer medium 120. In addition, the program instructions in FIG. 12 are also described as example instructions.

In some examples, the signal bearer medium 120 may include a computer-readable medium 121, for example, but not limited to, a hard disk drive, a compact disk (CD), a digital video disc (DVD), a digital tape, a memory, a read-only memory (read-only memory, ROM), or a random access memory (random access memory, RAM).

In some implementations, the signal bearer medium 120 may include a computer-recordable medium 122, for example, but not limited to, a memory, a read/write (R/W) CD, or an R/W DVD.

In some implementations, the signal bearer medium 120 may include a communication medium 123, for example, but not limited to, a digital and/or analog communication medium (for example, an optical fiber, a waveguide, a wired communication link, or a wireless communication link).

The signal bearer medium 120 may be conveyed by the communication medium 123 in a wireless form (for example, a wireless communication medium that complies with the IEEE 802.11 standard or another transmission protocol). The one or more program instructions may be, for example, one or more computer-executable instructions or one or more logic implementation instructions.

In some examples, for example, the path computation node, the first node, or the second node described for FIG. 5, FIG. 6, or FIG. 7 may be configured to provide various operations, functions, or actions in response to one or more program instructions in the computer-readable medium 121, the computer-recordable medium 122, and/or the communication medium 123.

An embodiment of this application further provides a network system. The network system includes a path computation node, a first node, and a second node. For related descriptions and beneficial effects of the path computation node, the first node, and the second node, refer to the foregoing descriptions. Details are not described herein again.

It should be understood that the arrangement described herein is merely used as an example. Therefore, a person skilled in the art understands that another arrangement and another element (for example, a machine, an interface, a function, a sequence, and a group of functions) can be used instead, and some elements may be omitted together based on a desired result. In addition, many of the described elements are functional entities that can be implemented as discrete or distributed components, or implemented in any suitable combination at any suitable location in combination with another component.

All or some of the foregoing embodiments may be implemented by software, hardware, firmware, or any combination thereof. When a software program is used to implement embodiments, all or some of embodiments may be implemented in a form of a computer program product. The computer program product includes one or more computer instructions. When the computer-executable instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A segment routing SR policy issuing method, applied to an SR network, wherein the network comprises a path computation node, a first node, and a second node; a first path and a second path that are different from each other exist between the first node and the second node, a source node of each of the first path and the second path is the first node, and a destination node of each of the first path and the second path is the second node; and the method comprises:
generating, by the path computation node, at least one SR policy; and
sending, by the path computation node, the at least one SR policy to the first node, wherein the at least one SR policy indicates the first node to generate a first packet flow based on a received original packet flow and send the first packet flow through the first path, and the at least one SR policy further indicates the first node to generate a second packet flow based on the original packet flow and send the second packet flow through the second path.

2. The method according to claim 1, wherein the at least one SR policy comprises a first segment identity SID, a packet of the original packet flow comprises the first SID, and the first SID indicates the first node to determine the at least one SR policy corresponding to the original packet flow.

3. The method according to claim 1, wherein the at least one SR policy further comprises a policy identity, routing information received by the first node comprises the policy identity and a prefix, a packet of the original packet flow matches the prefix, and the policy identity indicates the first node to determine the at least one SR policy corresponding to the original packet flow.

4. The method according to any one of claims 1 to 3, wherein the at least one SR policy comprises a first candidate path and a second candidate path, the first candidate path comprises a first segment list, the second candidate path comprises a second segment list, the first candidate path is the first path, the second candidate path is the second path, a packet of the first packet flow comprises the first segment list, and a packet of the second packet flow comprises the second segment list.

5. The method according to claim 4, wherein
the at least one SR policy comprises a first SR policy, the first SR policy comprises the first candidate path and the second candidate path, and a preference preference value of the first candidate path is the same as a preference preference value of the second candidate path;
or
the at least one SR policy comprises a first SR policy and a second SR policy, the first SR policy comprises the first candidate path, the second SR policy comprises the second candidate path, and an attribute value of the first SR policy is the same as an attribute value of the second SR policy.

6. The method according to any one of claims 1 to 5, wherein
before the generating, by the path computation node, at least one SR policy, the method further comprises:
obtaining, by the path computation node, a second SID; and
the generating, by the path computation node, at least one SR policy comprises:
generating, by the path computation node, the at least one SR policy based on the second SID, wherein a segment list of the at least one SR policy comprises the second SID, and the second SID in the segment list of the at least one SR policy indicates the second node to delete a redundant packet from the first packet flow and the second packet flow that are received.

7. The method according to claim 6, wherein the network further comprises a third node, a third path exists between the second node and the third node, a source node of the third path is the second node, and a destination node of the third path is the third node; and the method further comprises:
sending, by the path computation node, a third SR policy to the second node, wherein the third SR policy comprises a third candidate path, the third candidate path is the third path, and the third SR policy indicates the second node to forward a non-redundant packet through the third path, wherein the non-redundant packet is obtained based on the first packet flow and the second packet flow; and the third SR policy further comprises the second SID, and the second SID indicates the second node to determine the third SR policy corresponding to the first packet flow and the third SR policy corresponding to the second packet flow.

8. The method according to any one of claims 1 to 7, wherein the sending, by the path computation node, the at least one SR policy to the first node comprises:
sending, by the path computation node, the at least one SR policy to the first node according to a path computation element protocol PCEP or a border gateway protocol BGP.

9. The method according to any one of claims 1 to 8, wherein the at least one SR policy further indicates the first node to add a type-length-value TLV field to each of the packet of the first packet flow and the packet of the second packet flow; and the TLV field comprises a redundant parameter, and the redundant parameter indicates the second node to delete the redundant packet from the first packet flow and the second packet flow that are received.

10. The method according to any one of claims 1 to 9, wherein a payload of the packet in the first packet flow is the same as a payload of the packet in the second packet flow, and each of the payload of the packet in the first packet flow and the payload of the packet in the second packet flow is a payload in the original packet flow.

11. A segment routing SR policy receiving method, applied to an SR network, wherein the network comprises a first node and a second node; a first path and a second path that are different from each other exist between the first node and the second node, a source node of each of the first path and the second path is the first node, and a destination node of each of the first path and the second path is the second node; and the method comprises:
obtaining, by the first node, at least one SR policy, wherein the at least one SR policy indicates the first node to generate a first packet flow based on a received original packet flow and send the first packet flow through the first path, and the at least one SR policy further indicates the first node to generate a second packet flow based on the original packet flow and send the second packet flow through the second path.

12. The method according to claim 11, wherein the network further comprises a path computation node, and the obtaining, by the first node, at least one SR policy comprises:
receiving, by the first node, the at least one SR policy sent by the path computation node; or
generating, by the first node, the at least one SR policy.

13. The method according to claim 11 or 12, wherein the at least one SR policy comprises a first segment identity SID, a packet of the original packet flow comprises the first SID, and the first SID indicates the first node to determine the at least one SR policy corresponding to the original packet flow.

14. The method according to claim 11 or 12, wherein the at least one SR policy comprises a policy identity, and the method further comprises:
receiving, by the first node, routing information sent by the second node, wherein the routing information comprises the policy identity and a prefix, a packet of the original packet flow matches the prefix, and the policy identity indicates the first node to determine the at least one SR policy corresponding to the original packet flow.

15. The method according to any one of claims 11 to 14, wherein the at least one SR policy comprises a first candidate path and a second candidate path, the first candidate path comprises a first segment list, the second candidate path comprises a second segment list, the first candidate path is the first path, the second candidate path is the second path, a packet of the first packet flow comprises the first segment list, and a packet of the second packet flow comprises the second segment list.

16. The method according to claim 15, wherein
the at least one SR policy comprises a first SR policy, the first SR policy comprises the first candidate path and the second candidate path, and a preference preference value of the first candidate path is the same as a preference preference value of the second candidate path;
or
the at least one SR policy comprises a first SR policy and a second SR policy, the first SR policy comprises the first candidate path, the second SR policy comprises the second candidate path, and an attribute value of the first SR policy is the same as an attribute value of the second SR policy.

17. The method according to any one of claims 11 to 16, wherein the at least one SR policy indicates the first node to add a type-length-value TLV field to each of the packet of the first packet flow and the packet of the second packet flow; and the TLV field comprises a redundant parameter, and the redundant parameter indicates the second node to delete a redundant packet from the first packet flow and the second packet flow that are received.

18. The method according to any one of claims 11 to 17, wherein a payload of the packet in the first packet flow is the same as a payload of the packet in the second packet flow, and each of the payload of the packet in the first packet flow and the payload of the packet in the second packet flow is a payload in the original packet flow.

19. A segment identity issuing method, applied to an SR network, wherein the network comprises a path computation node, a first node, and a second node; a first path and a second path exist between the first node and the second node, a source node of each of the first path and the second path is the first node, and a destination node of each of the first path and the second path is the second node; and the method comprises:
issuing, by the second node, a second segment identity SID, wherein the second SID is used by the path computation node to generate at least one SR policy, the at least one SR policy indicates the first node to generate a first packet flow based on a received original packet flow and send the first packet flow through the first path, and the at least one SR policy further indicates the first node to generate a second packet flow based on the original packet flow and send the second packet flow through the second path, wherein
packets of the first packet flow and the second packet flow comprise the second SID, and the second SID in the packets of the first packet flow and the second packet flow indicates the second node to delete a redundant packet from the first packet flow and the second packet flow that are received.

20. The method according to claim 19, wherein the method further comprises:
issuing, by the second node, routing information, wherein the routing information comprises a policy identity and a prefix, a packet of the original packet flow matches the prefix, and the policy identity indicates the first node to determine the at least one SR policy corresponding to the original packet flow.

21. The method according to claim 19 or 20, wherein the network further comprises a third node, a third path exists between the second node and the third node, a source node of the third path is the second node, and a destination node of the third path is the third node; and the method further comprises:
receiving, by the second node, a third SR policy sent by the path computation node, wherein
the third SR policy comprises a third candidate path, the third candidate path is the third path, and the third SR policy indicates the second node to forward a non-redundant packet through the third path, wherein the non-redundant packet is obtained based on the first packet flow and the second packet flow; and the third SR policy further comprises the second SID, and the second SID indicates the second node to determine the third SR policy corresponding to the first packet flow and the third SR policy corresponding to the second packet flow.

22. The method according to any one of claims 19 to 21, wherein each of the packet of the first packet flow and the packet of the second packet flow comprises a type-length-value TLV field, the TLV field comprises a redundant parameter, and the redundant parameter indicates the redundant packet.

23. The method according to claim 19, wherein the second SID is generated by the second node, and the issuing, by the second node, a second SID comprises:
flooding, by the second node, the second SID according to an interior gateway protocol IGP or a border gateway protocol-link state BGP-LS.

24. A path computation node, applied to a segment routing SR network, wherein the network further comprises a first node and a second node; a first path and a second path that are different from each other exist between the first node and the second node, a source node of each of the first path and the second path is the first node, and a destination node of each of the first path and the second path is the second node; and the path computation node comprises:
a processing unit, configured to generate at least one SR policy; and
a sending unit, configured to send the at least one SR policy to the first node, wherein the at least one SR policy indicates the first node to generate a first packet flow based on a received original packet flow and send the first packet flow through the first path, and the at least one SR policy further indicates the first node to generate a second packet flow based on the original packet flow and send the second packet flow through the second path.

25. The path computation node according to claim 24, wherein the at least one SR policy comprises a first segment identity SID, a packet of the original packet flow comprises the first SID, and the first SID indicates the first node to determine the at least one SR policy corresponding to the original packet flow.

26. The path computation node according to claim 24, wherein the at least one SR policy further comprises a policy identity, routing information received by the first node comprises the policy identity and a prefix, a packet of the original packet flow matches the prefix, and the policy identity indicates the first node to determine the at least one SR policy corresponding to the original packet flow.

27. The path computation node according to any one of claims 24 to 26, wherein the at least one SR policy comprises a first candidate path and a second candidate path, the first candidate path comprises a first segment list, the second candidate path comprises a second segment list, the first candidate path is the first path, the second candidate path is the second path, a packet of the first packet flow comprises the first segment list, and a packet of the second packet flow comprises the second segment list.

28. The path computation node according to claim 27, wherein
the at least one SR policy comprises a first SR policy, the first SR policy comprises the first candidate path and the second candidate path, and a preference preference value of the first candidate path is the same as a preference preference value of the second candidate path;
or
the at least one SR policy comprises a first SR policy and a second SR policy, the first SR policy comprises the first candidate path, the second SR policy comprises the second candidate path, and an attribute value of the first SR policy is the same as an attribute value of the second SR policy.

29. The path computation node according to any one of claims 24 to 28, wherein
the processing unit is further configured to obtain a second SID; and is specifically configured to generate the at least one SR policy based on the second SID, wherein a segment list of the at least one SR policy comprises the second SID, and the second SID in the segment list of the at least one SR policy indicates the second node to delete a redundant packet from the first packet flow and the second packet flow that are received.

30. The path computation node according to claim 29, wherein the network further comprises a third node, a third path exists between the second node and the third node, a source node of the third path is the second node, and a destination node of the third path is the third node; and
the sending unit is further configured to send a third SR policy to the second node, wherein the third SR policy comprises a third candidate path, the third candidate path is the third path, and the third SR policy indicates the second node to forward a non-redundant packet through the third path, wherein the non-redundant packet is obtained based on the first packet flow and the second packet flow; and the third SR policy further comprises the second SID, and the second SID indicates the second node to determine the third SR policy corresponding to the first packet flow and the third SR policy corresponding to the second packet flow.

31. The path computation node according to any one of claims 24 to 30, wherein
the sending unit is specifically configured to send the at least one SR policy to the first node according to a path computation element protocol PCEP or a border gateway protocol BGP.

32. The path computation node according to any one of claims 24 to 31, wherein the at least one SR policy further indicates the first node to add a type-length-value TLV field to each of the packet of the first packet flow and the packet of the second packet flow; and the TLV field comprises a redundant parameter, and the redundant parameter indicates the second node to delete a redundant packet from the first packet flow and the second packet flow that are received.

33. The path computation node according to any one of claims 24 to 32, wherein a payload of the packet in the first packet flow is the same as a payload of the packet in the second packet flow, and each of the payload of the packet in the first packet flow and the payload of the packet in the second packet flow is a payload in the original packet flow.

34. A first node, applied to a segment routing SR network, wherein the network further comprises a second node; a first path and a second path that are different from each other exist between the first node and the second node, a source node of each of the first path and the second path is the first node, and a destination node of each of the first path and the second path is the second node; and the first node comprises:
a processing unit, configured to obtain at least one SR policy, wherein the at least one SR policy indicates the first node to generate a first packet flow based on a received original packet flow and send the first packet flow through the first path, and the at least one SR policy further indicates the first node to generate a second packet flow based on the original packet flow and send the second packet flow through the second path.

35. The first node according to claim 34, wherein the network further comprises a path computation node, and the first node further comprises:
a receiving unit, configured to receive the at least one SR policy sent by the path computation node;
or
the processing unit, specifically configured to generate the at least one SR policy.

36. The first node according to claim 34 or 35, wherein the at least one SR policy comprises a first segment identity SID, a packet of the original packet flow comprises the first SID, and the first SID indicates the first node to determine the at least one SR policy corresponding to the original packet flow.

37. The first node according to claim 34 or 35, wherein the at least one SR policy comprises a policy identity; and
the receiving unit is further configured to receive routing information sent by the second node, wherein the routing information comprises the policy identity and a prefix, a packet of the original packet flow matches the prefix, and the policy identity indicates the first node to determine the at least one SR policy corresponding to the original packet flow.

38. A second node, applied to a segment routing SR network, wherein the network further comprises a path computation node and a first node; a first path and a second path that are different from each other exist between the first node and the second node, a source node of each of the first path and the second path is the first node, and a destination node of each of the first path and the second path is the second node; and the second node comprises:
a sending unit, configured to issue a second segment identity SID, wherein the second SID is used by the path computation node to generate at least one SR policy, the at least one SR policy indicates the first node to generate a first packet flow based on a received original packet flow and send the first packet flow through the first path, and the at least one SR policy further indicates the first node to generate a second packet flow based on the original packet flow and send the second packet flow through the second path, wherein
packets of the first packet flow and the second packet flow comprise the second SID, and the second SID in the packets of the first packet flow and the second packet flow indicates the second node to delete a redundant packet from the first packet flow and the second packet flow that are received.

39. The second node according to claim 38, wherein
the sending unit is further configured to issue routing information, wherein the routing information comprises a policy identity and a prefix, a packet of the original packet flow matches the prefix, and the policy identity indicates the first node to determine the at least one SR policy corresponding to the original packet flow.

40. The second node according to claim 38 or 39, wherein the network further comprises a third node, a third path exists between the second node and the third node, a source node of the third path is the second node, and a destination node of the third path is the third node; and the second node further comprises:
a receiving unit, configured to receive a third SR policy sent by the path computation node, wherein
the third SR policy comprises a third candidate path, the third candidate path is the third path, and the third SR policy indicates the second node to forward a non-redundant packet through the third path, wherein the non-redundant packet is obtained based on the first packet flow and the second packet flow; and the third SR policy further comprises the second SID, and the second SID indicates the second node to determine the third SR policy corresponding to the first packet flow and the third SR policy corresponding to the second packet flow.

41. The second node according to any one of claims 38 to 40, wherein each of the packet of the first packet flow and the packet of the second packet flow comprises a type-length-value TLV field, the TLV field comprises a redundant parameter, and the redundant parameter indicates the redundant packet.

42. The second node according to claim 38, wherein the second SID is generated by the second node; and
the sending unit is specifically configured to flood the second SID according to an interior gateway protocol IGP or a border gateway protocol-link state BGP-LS.

43. A computer-readable storage medium, wherein the computer-readable storage medium stores a computer program, and when the computer program is run on a computer, the computer is enabled to perform the method according to any one of claims 1 to 10, any one of claims 11 to 18, or any one of claims 19 to 23.

44. A network system, wherein the network system comprises the path computation node according to any one of claims 24 to 33, the first node according to any one of claims 34 to 37, and the second node according to any one of claims 38 to 42.
